# FASCICULE DE BREVET EUROPEEN

(11) **EP 3 143 852 B1**
(45) Date de publication et mention de la délivrance du brevet: **26.12.2018**
(21) Numéro de dépôt: 16188365.7
(22) Date de dépôt: 12.09.2016
(51) Int. Cl.: A01B 33/02, A01B 33/08

(54) **ÉQUIPEMENT DE MOTOCULTURE**
AUSSTATTUNG FÜR MOTORISIERTE LANDMASCHINE
MECHANISED FARMING EQUIPMENT

(30) Priorité: 17.09.2015 FR 1558726
(43) Date de publication de la demande: 22.03.2017
(73) Titulaire: Pubert Henri SAS, 85110 Chantonnay (FR)
(72) Inventeur: LEJEUNE, Pierre, 85110 SAINTE-CECILE (FR); VION, Peter, 85700 POUZAUGES (FR); GERBAUD, Nicolas, 85110 MONSIREIGNE (FR)
(74) Mandataire: Vidon Brevets & Stratégie

(56) Documents cités:
- EP-A1- 2 378 139
- FR-A1- 2 757 595
- FR-A1- 2 825 437

## Description

### 1. Domaine de l'invention

Le domaine de l'invention est celui de la motoculture.

Plus précisément, l'invention concerne les équipements de motoculture tels que les motoculteurs, les motobineuses, ou tout autre équipement, notamment ceux à conducteur marchant, équipé d'outils de travail du sol et/ou de roues, présentant un moteur et une boîte de vitesses, reliés par une courroie de transmission.

### 2. Solutions de l'art antérieur

Les engins du type motoculteur ou analogues comportent pour la plupart un outil mû par un moteur.

La transmission est généralement réalisée par l'intermédiaire d'une courroie montée lâche sur deux poulies, l'une (dite poulie moteur) en liaison avec l'arbre moteur et l'autre (dite poulie réceptrice) en liaison avec la boîte de vitesses et l'outil, et d'un moyen de tension de la courroie, du type galet ou came, dont le déplacement est commandé par un câble sous gaine actionné par un levier de commande d'embrayage qui est relié à une poignée de la barre de guidage de l'engin.

L'actionnement du levier de commande d'embrayage contre la poignée permet, par la tension de la courroie sous l'action du galet, d'embrayer l'outil, le relâchement du levier de commande d'embrayage entraînant le débrayage, ce qui constitue une sécurité pour l'utilisateur.

Ce dispositif d'embrayage présente de nombreux inconvénients.

D'une part, des courroies trapézoïdales sont généralement utilisées par les constructeurs de motobineuse pour assurer, par tension, l'embrayage entre la poulie moteur et la poulie réceptrice. L'inconvénient principal de ces courroies trapézoïdales réside dans le fait qu'elles doivent, selon les préconisations de leurs fabricants, être utilisées en tension permanente pour assurer une durée de vie acceptable.

La durée de vie de ce type de courroie d'embrayage sur les motobineuses actuelles est d'environ 40 à 60 heures (soit environ 1200 à 1800 actions d'embrayage).

Il est donc nécessaire d'effectuer des réglages régulièrement. Lors de la fabrication de l'équipement, le moteur et la boite de vitesses sont fixés sur le châssis, et il est nécessaire de régler l'entraxe entre ces deux éléments afin de positionner précisément les éléments et d'assurer une tension optimale de la courroie. Ceci requiert de prévoir des jeux de montage du moteur et de la boîte de vitesses sur le châssis (qui peuvent être obtenu par la mise en oeuvre sur le châssis de trous oblongs de fixation du moteur et de la boîte de vitesses) et d'utiliser un gabarit, qui une fois le moteur monté libre sur le châssis, permet de définir l'entraxe entre le moteur et la boîte de vitesses.

Une fois la boîte de vitesses positionnée, l'opérateur procède au serrage final du moteur et de la boîte de vitesses sur le châssis. Par la suite, les poulies et la courroie sont généralement recouverts par un cache, ou capot de protection, qui est fixé sur le châssis de façon amovible, comme décrit dans le document EP-A-2 378 139.

D'autre part, le serrage du levier de commande d'embrayage nécessite un effort important qu'il faut maintenir durant le travail. Cet effort peut toutefois être limité par démultiplication en augmentant la course du levier de commande d'embrayage, ce qui génère un autre inconvénient pour les personnes dont les mains sont petites, les femmes par exemple.

De plus, l'effort à fournir pour maintenir le levier de commande d'embrayage serré contre la poignée ne peut pas être durable, notamment lorsque le terrain est chaotique, en sorte que la tension de la courroie n'est pas constante, ce qui entraîne le patinage de celle-ci et donc une usure rapide.

De plus encore, la commande par câble étant directe et l'effort à fournir étant difficilement dosable du fait de son importance, l'embrayage s'effectue instantanément, en sorte que la mise en marche est brutale.

Par ailleurs, la forme du levier actionneur portant le galet tensionneur de la courroie est généralement complexe et nécessite plusieurs opérations de pliage, ce qui augmente le temps et les coûts de production d'une telle pièce.

L'actionnement du levier actionneur par la commande au guidon nécessite une longueur de câble d'embrayage relativement importante et est effectuée par le biais de plusieurs pièces intermédiaires, ce qui occasionne parfois des dysfonctionnements dans l'actionnement du levier actionneur.

Par ailleurs, il est nécessaire pour l'utilisateur (en moyenne toutes les 10 heures d'utilisation) d'agir régulièrement sur un barillet de réglage intégré à la gaine du câble d'embrayage afin d'ajuster la tension de ce dernier, et permettre ainsi le passage du couple moteur sans patinage de la courroie.

Enfin, la fabrication des engins actuels, et leur démontage en cas de panne, est relativement complexe et nécessite de multiples opérations de (dé)montage , ce qui augmente les coûts.

### 3. Objectifs de l'invention

L'invention a notamment pour objectif de pallier au moins certains de ces inconvénients de l'art antérieur en proposant un équipement de motoculture dont la structure et le dispositif de commande d'embrayage permettent une tension constante de la courroie d'embrayage ce qui allonge la durée de vie de celle-ci.

L'invention a également pour objectif, selon au moins un mode de réalisation, de fournir un dispositif de commande d'embrayage nécessitant un effort peu important qui peut être maintenu longtemps.

Un autre objectif de l'invention, selon au moins un mode de réalisation, est de fournir un équipement de motoculture comportant un nombre réduit d'éléments mécaniques, coûtant peu cher à fabriquer et dont la maintenance est aisée.

### 4. Exposé de l'invention

Ces objectifs, ainsi que d'autres qui apparaîtront par la suite, sont atteints à l'aide d'un équipement de motoculture comprenant un châssis portant au moins un outil de travail du sol, une boîte de vitesses et un moteur entraînant en rotation ledit outil par l'intermédiaire de ladite boîte de vitesses et d'une courroie de transmission montée lâche sur deux poulies, l'une en liaison avec l'arbre menant dudit moteur et l'autre en liaison avec ladite boîte de vitesses, l'embrayage étant réalisé par application contre ladite courroie de moyens de mise en tension manoeuvrables par un levier de commande disposé à une poignée de la barre de guidage dudit équipement, ledit équipement comprend un capot de protection de ladite courroie.

Selon l'invention, ledit capot de protection de ladite courroie présente des premiers moyens de solidarisation avec ledit moteur et des deuxièmes moyens de solidarisation avec ladite boîte de vitesses, lesdits premiers et deuxièmes moyens de solidarisation définissant un entraxe entre ledit moteur et ladite boîte de vitesses.

Ainsi, le capot de protection de la courroie, ou cache, n'est pas fixé au châssis de l'équipement de motoculture comme cela se fait habituellement, mais il est solidaire du moteur et de la boîte de vitesses.

Il est donc prévu sur le cache, à des emplacements prédéterminés, des moyens de solidarisation du cache au moteur d'une part et à la boîte de vitesses d'autre part, qui définissent l'entraxe entre le moteur et la boîte de vitesses, c'est-à-dire la distance entre l'arbre du moteur portant la poulie moteur et l'arbre d'entrée de la boîte de vitesse portant la poulie réceptrice lors du montage du moteur et de la boîte de vitesses sur le châssis.

Outre sa fonction de protection de la courroie qui est montée lâche sur les poulies moteur et réceptrice, le cache sert de gabarit ou d'étalon d'assemblage qui permet le placement précis du moteur et de la boite de vitesses, et donc de la courroie.

Ce montage particulier du cache sur le moteur et la boite de vitesses permet de réduire les jeux nécessaires, ce qui simplifie le montage, le remontage après intervention et limite les réglages.

La solution de l'invention assure une tension optimale de la courroie et supprime, ou à tout le moins réduit, les phénomènes de patinage de la courroie. Elle assure en outre une augmentation significative de la durée de vie de l'embrayage.

Selon un aspect particulier de l'invention, lesdits premiers et deuxièmes moyens de solidarisation comprennent chacun au moins une lumière formée dans ledit capot de protection, apte à recevoir une vis de solidarisation avec ledit moteur et ladite boîte de vitesses respectivement.

Selon un aspect particulier de l'invention, lesdits moyens de mise en tension de la courroie comprennent un levier actionneur mobile en rotation autour d'un axe solidaire dudit moteur.

Le fait que le levier soit monté sur le moteur permet une meilleure efficacité et une réduction du bras de levier, par rapport au cas classique où il est monté sur le châssis. Ceci suppose que l'axe de rotation du levier traverse le capot.

Selon un aspect particulier de l'invention, ledit levier actionneur est relié audit levier de commande par l'intermédiaire d'un câble d'embrayage et d'un ressort de traction, assurant un maintien de la tension du câble

Selon un aspect particulier de l'invention, ledit ressort de traction coopère avec un ressort de compensation.

Selon un aspect particulier de l'invention, ledit capot de protection comprend une poutre de reprise d'effort de réaction dudit câble.

Selon un aspect particulier de l'invention, ladite poutre est sensiblement parallèle à l'axe dudit câble.

Selon un aspect particulier de l'invention, ladite poutre présente une portion évasée, en partie inférieure dudit capot.

Selon un aspect particulier de l'invention, ledit capot comprend des moyens de mise en position et maintien en position d'un arrêt d'une gaine dudit câble.

Il n'est donc plus nécessaire d'effectuer régulièrement des réglages du câble d'embrayage.

Selon un aspect particulier de l'invention, la paroi dudit capot de protection comprend au moins une ouverture de refroidissement.

Selon un aspect particulier de l'invention, ledit capot de protection comprend au moins un repère visuel de la position angulaire dudit levier actionneur.

Préférentiellement, l'équipement de motoculture selon l'invention appartient au groupe comprenant les motoculteurs, les débroussailleuses à roues, les motobineuses, les microbineuses, les faucheuses broyeuses, les émousseurs, les scarificateurs, et les aérateurs de pelouse.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est une vue de côté d'une motobineuse suivant un mode de réalisation de l'invention ;
- la figure 2 est une autre vue de côté, partielle, de la motobineuse de la figure 1 ;
- la figure 3A est une vue partielle, en perspective, de la motobineuse des figures 1 et 2 ;
- la figure 3B est une vue de détail de la figure 3A ;
- la figure 4 est une vue de détail montrant le levier d'embrayage de la motobineuse dans trois positions angulaires distinctes ;
- la figure 5 est une vue de détail du dispositif tensionneur de la courroie de la motobineuse conforme à l'invention ;
- les figures 6A et 6B sont des vues partielles d'une motobineuse selon l'art antérieur et d'une motobineuse conforme à l'invention respectivement ;
- la figure 7 est une vue de détail, partielle, de la motobineuse conforme à l'invention montrant la mise en place du câble d'embrayage ;
- la figure 8 est une vue montrant le cache intérieur, seul, destiné à être monté sur la motobineuse de l'invention ;
- la figure 9 est une vue en perspective du cache intérieur monté sur la motobineuse de l'invention, sans la courroie et la poulie réceptrice.

### 6. Description détaillée de l'invention

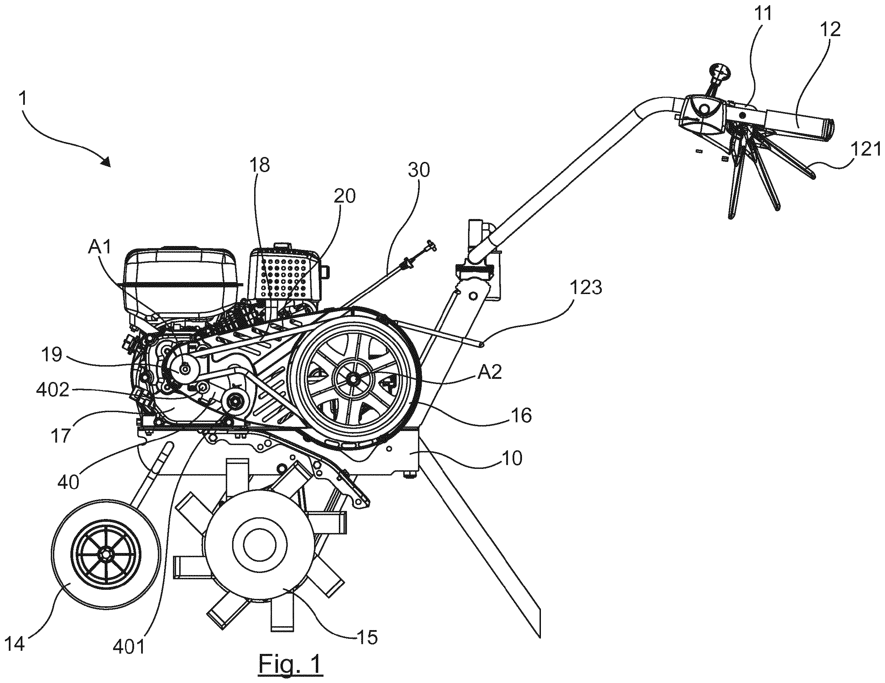

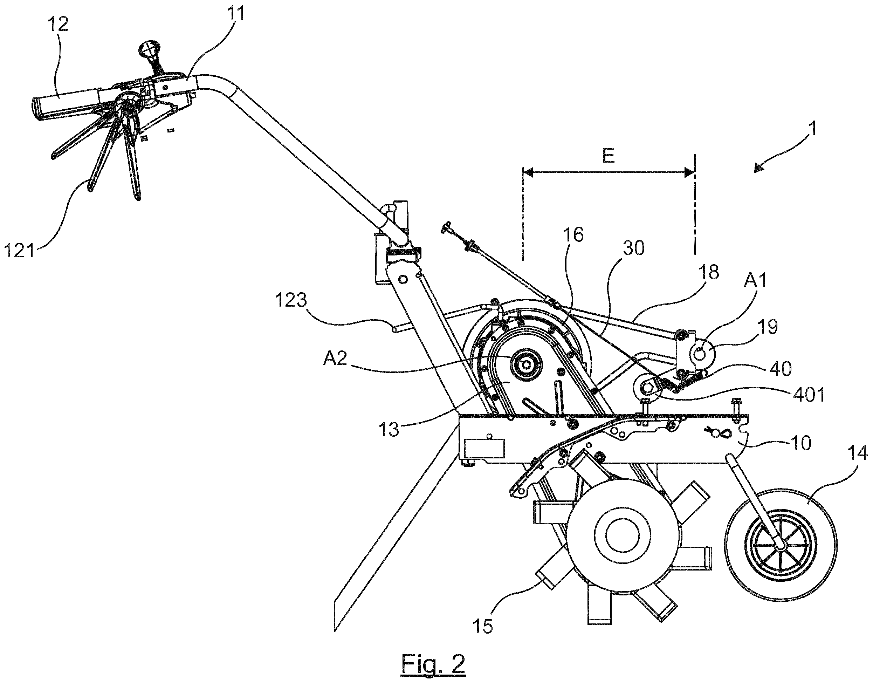

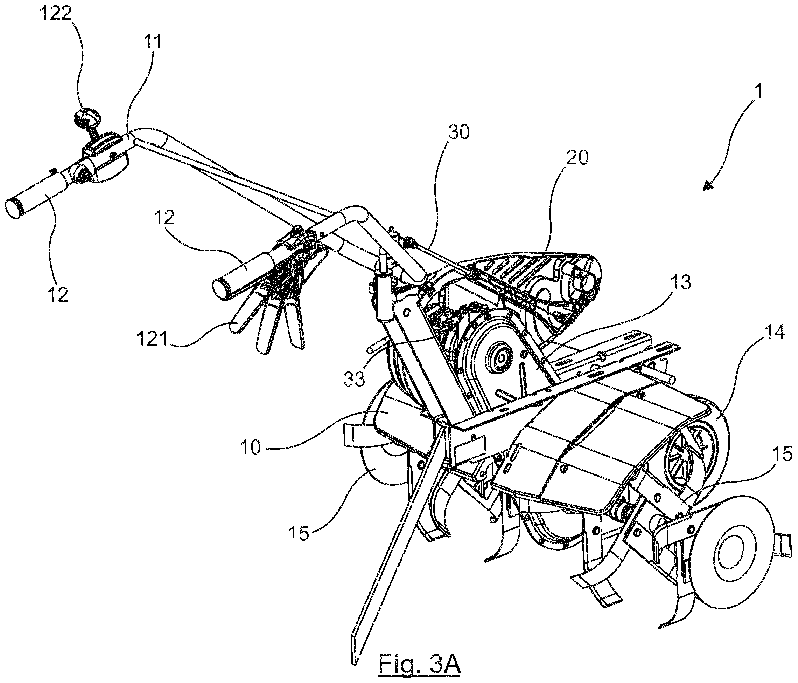

Les figures 1, 2 et 3A représentent une motobineuse selon un mode de réalisation de l'invention, les figures 2 et 3A étant des vues de la motobineuse de la figure 1 sans moteur.

Cette motobineuse 1 est constituée d'un châssis monobloc 10 horizontal supportant une roue de transport 14 et deux outils 15 de travail du sol montés en rotation sous ce dernier autour d'un arbre transversal mû par une chaîne disposée dans un carter 13. De façon classique, la chaîne est entraînée par l'axe d'une poulie, dite réceptrice, 16 située à l'arrière du chassis 10, au-dessus de ce dernier. La poulie réceptrice 16 est elle-même entraînée par un moteur 17 thermique, situé à l'avant du châssis 10, l'arbre du moteur 17 portant une poulie moteur 19 qui est reliée à la poulie réceptrice 16 par une courroie 18 d'embrayage.

On note que l'arbre du moteur 17 et une poulie moteur 19 ont le même axe A1.

Les figures 2 et 3A montrent que la carter 13 comprenant la chaîne traverse le châssis 10 par une ouverture ménagée dans ce dernier.

La motobineuse 1 comporte, de façon classique, un guidon 11 à l'extrémité duquel se trouvent des poignées 12. La poignée gauche 12 porte un levier d'accélérateur, ou de commande des gaz, 122.

La motobineuse 1 comporte notamment une boîte de vitesses 33 entre le moteur 17 et les outils 15 qui permet aux outils de changer d'allure et/ou de faire marche arrière. Ces changements d'allure sont utiles, par exemple, pour adapter la vitesse de la motobineuse 1 à la nature du sol à travailler. La marche arrière, elle, permet de manoeuvrer plus facilement la motobineuse 1, sans efforts excessifs pour l'utilisateur.

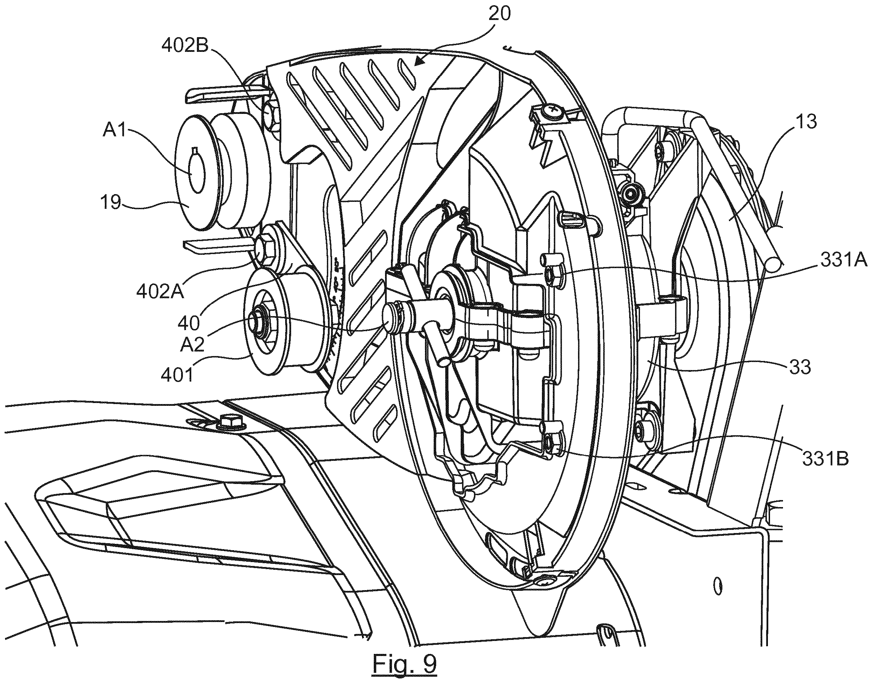

L'axe de la poulie réceptrice 16 est solidaire de l'arbre d'entrée de la boîte de vitesses 33. On note que la poulie réceptrice 16 et l'arbre d'entrée de la boîte de vitesses 33 ont le même axe A2 (également visible sur la figure 9). La boîte de vitesses 33 est commandée par l'intermédiaire d'un levier de sélection de vitesse 123. Chaque position du levier de sélection de vitesse 123 correspond à un rapport de transmission prédéterminé.

La courroie 18 étant montée lâche entre les poulies 16 et 19, l'entraînement de la poulie moteur 19 ne peut être réalisé que par la tension de la courroie 18 au moyen d'un galet 401 de placage de la courroie 18 (appelé également « galet tendeur ») qui prend appui sur celle-ci.

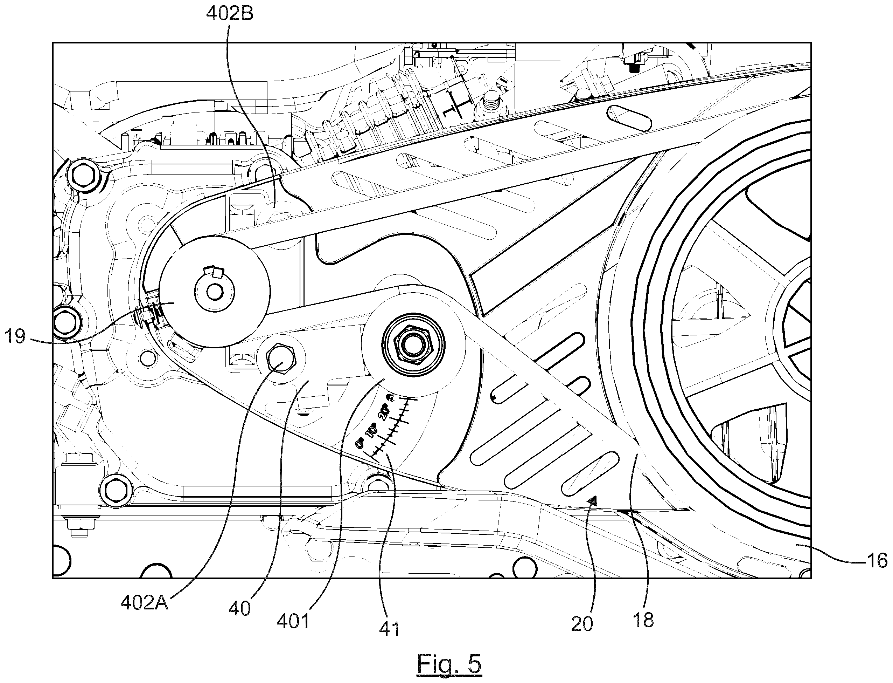

Sur les figures 1, 6B et 7, ce galet 401 n'est pas en contact avec la courroie 18, mais est en contact avec avec cette dernière sur la figure 5.

Comme illustré sur les figures 2, 5, 6B et 7, le galet 401 est monté à une extrémité d'un levier 40, ce dernier étant articulé en pivotement autour d'un axe 402A, et relié à l'extrémité d'un câble de commande, ou d'embrayage, 30, lui-même relié à un levier de commande d'embrayage 121.

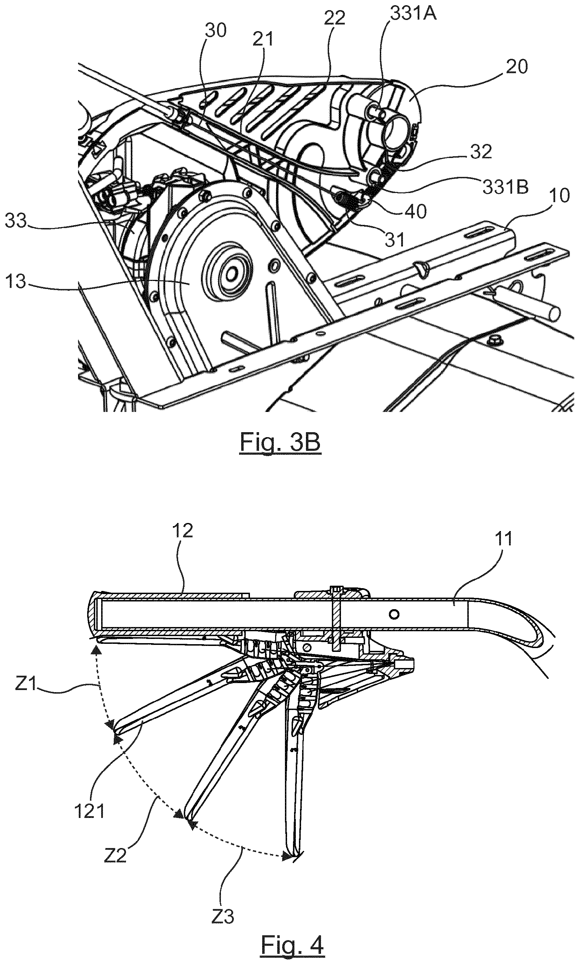

Comme illustré sur vue de détail de la figure 4, le levier de commande d'embrayage 121 est situé à proximité de la poignée droite 12 du guidon 11 de manoeuvre de l'équipement et peut pivoter pour prendre plusieurs positions. Le passage de la première position (basse, c'est-à-dire à la verticale) à la deuxième position (relévee vers la poignée 12) entraîne la sollicitation en traction du câble de commande 30. Ce câble de commande 30 est en outre associé à un ressort de rappel ou de traction 32 (figure 3B) pour permettre le retour du levier de commande d'embrayage 121 dans sa position initiale.

Le serrage du levier de commande d'embrayage 121 contre la poignée 12 permet, par la tension de la courroie 18, d'embrayer les outils 15, son relâchement entraînant le débrayage. Plus précisément, le rapprochement du levier de commande d'embrayage 121 permet une traction sur le câble de commande 30, et donc le pivotement du galet 401 et la tension de la courroie 18. Comme on le voit sur la figure 5, le galet 401 fait fléchir vers l'intérieur la portion de courroie 18 comprise entre les deux poulies 16 et 19.

Le déplacement du galet 401 ne demande que peu d'effort sur le levier de commande d'embrayage 121. Par conséquent, le travail peut être effectué aisément et sans fatigue, évitant ainsi d'éventuels relâchements susceptibles de détendre la courroie 18 et d'entraîner l'usure prématurée de cette dernière. La tension de la courroie 18 est réalisée progressivement ce qui permet un démarrage sans à-coup.

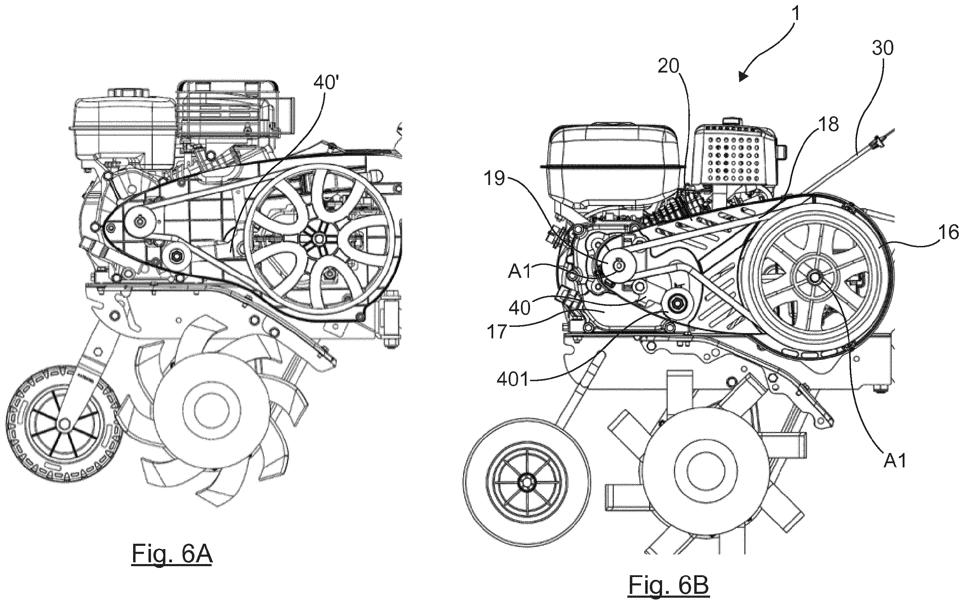

Comme illustré sur la figure 6B, le levier actionneur 40 est compact et agit au plus près de la poulie moteur 19. Pour ce faire, il est implanté directement sur l'interface frontale du moteur 17 (il est donc solidaire de ce dernier).

Selon l'approche de l'art antérieur, illustrée sur la figure 6A, le levier actionneur 40' est fixé en pivot sur un support spécifiquement rajouté sur le châssis de la motobineuse, ce qui complexifie le montage et augmente les coûts de fabrication. En outre, ce levier actionneur 40' présente une forme globale en équerre relativement complexe et volumineuse.

Le levier actionneur 40 est de taille réduite (plus court) et de forme simple par rapport au levier actionneur 40', et il est donc moins couteux à fabriquer. L'angle d'actionnement du levier 40 est de 90° (comme illustré sur la figure 3B, l'axe du câble de commande 30 et du levier 40 sont perpendiculaires), avec un rapport de distance réduit par rapport à l'approche de la figure 6A, ce qui optimise le fonctionnement.

Cette implantation du levier actionneur 40 sur le moteur 17, plutôt que sur un support monté sur le châssis, permet de réduire considérablement la chaîne de cotes (une au lieu de quatre) et participe en grande partie à la fiabilité du dispositif d'embrayage.

Dans l'art antérieur, l'entraxe E entre l'arbre moteur et l'arbre de la boîte de vitesses est fonction de trois cotes variables, à savoir la distance entre les points de fixation du moteur et du carter sur le châssis, de la distance entre les points de fixation du moteur et du support du levier actionneur et de la distance entre les points de fixation du du support du levier actionneur et du carter. L'entraxe E cumule ainsi les tolérances ou variations de ces trois cotes, la quatrième cote correspondant à la distance entre le châssis et l'axe de fixation du levier actionneur sur son support.

L'entraxe E pour la motobineuse de l'invention est défini par une unique cote qui est fixe.

De façon classique, la boîte de vitesses 33 et le moteur 17 sont fixés sur le châssis 10 de la motobineuse 1. Le reste des éléments est supporté par un cache intérieur, ou premier capot de protection, qui est en matière plastique et qui permet, en outre, de fixer le second capot de protection (capot courroie), amovible. Sur les figures, par souci de clarté, seul le cache intérieur est illustrée.

Conformément à l'invention, le cache intérieur 20 assure plusieurs fonctions qui seront décrites par la suite, à savoir :
- la solidarisation au moteur 17,
- la mise en position et le maintien en position de la boite de vitesses 33,
- la gestion des entraxes et notamment de l'entraxe E (illustré sur la figure 2) entre l'arbre du moteur 17 portant la poulie moteur 19 et l'arbre d'entrée de la boîte de vitesse 33 portant la poulie réceptrice 16, qui correspond à la distance entre l'axe A1 et l'axe A2 égale à 308 mm dans cet exemple (ce qui permet un montage et un démontage aisé lors d'une réparation),
- la mise en position et le maintien en position de l'arrêt de gaine du câble de commande 30,
- une conception respectant les principes du développement durable et de l'environnement (le cache requiert un volume de matière plastique réduit) et l'optimisation de la résistance mécanique du cache par le biais d'une poutre 21 longitudinale évasée en tulipe (figure 3B), et
- une simplification et fiabilisation de la conception de la motobineuse 1 par la réduction du nombre de pièces assurant les mêmes fonctions. En l'occurence, la motobineuse de l'inventon requiert quatre pièces de moins que la motobineuse de l'art anétrieur illustrée sur la figure 6A, et permet de s'affranchir du support du levier actionneur qui est habituellement soudé sur le châssis, de l'entretoise pivot du levier actionneur, de la ou des patte(s) de fixation du cache intérieur sur le châssis et du support d'arrêt de gaine qui est habituellement soudé sur le châssis.

De façon avantageuse, le cache intérieur 20 n'est pas fixé sur le châssis 10 conformément à l'art antérieur, mais sur la boite de vitesses 33 à l'arrière et sur le moteur 17 à l'avant.

Il est donc prévu sur le cache intérieur 20, à des emplacements prédéterminés, des moyens de solidarisation du cache intérieur 20 au moteur 17 d'une part et à la boîte de vitesses 33 d'autre part, qui définissent l'entraxe entre le moteur 17 et la boîte de vitesses 33, c'est-à-dire la distance entres les axes A1 et A2. Ces moyens de solidarisation comprennent chacun au moins une lumière formée dans le cache intérieur, apte à recevoir une vis de solidarisation avec le moteur et la boîte de vitesses respectivement.

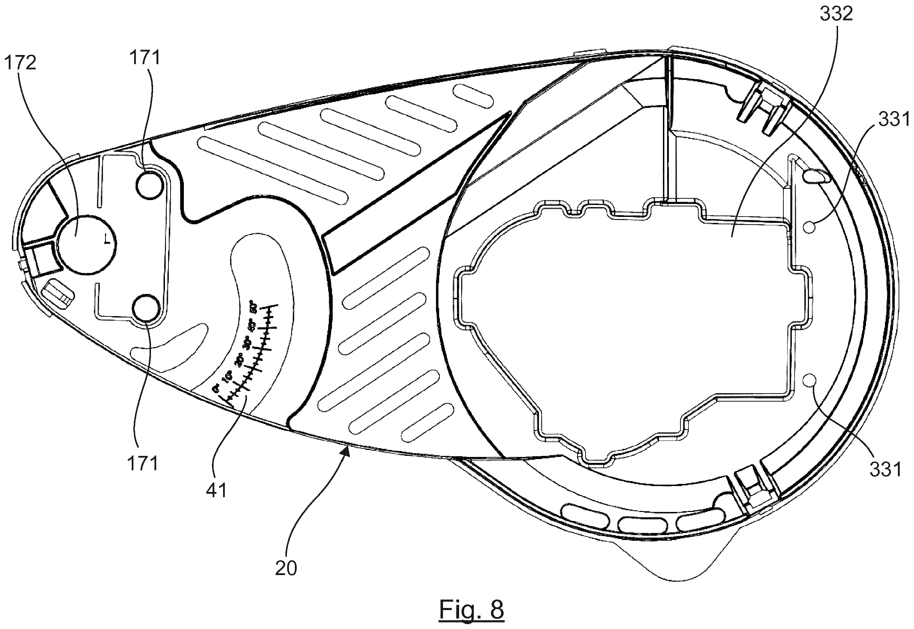

Plus précisément, deux trous (ou lumières) circulaires de mise en position et de maintien en position du moteur 17 sur le cache intérieur 20 sont référencés 171 sur la figure 8 (montrant le cache intérieur 20 seul). On note que ces trous 171 sont destinés à recevoir les axes 402A et 402B visibles sur les figures 5 et 9. Les deux trous (ou lumières) circulaires de mise en position et de maintien en position de la boite de vitesse 33 sur le cache intérieur 20 sont référencés 331 sur cette figure 8. Les axes de fixation 331A, 331B destinés à venir se loger dans ces trous 331 sont visibles sur les figures 3B et 9.

Par ailleurs, le cache intérieur 20 comprend une lumière circulaire 172 permettant le passage de l'arbre du moteur 17 portant la poulie moteur 19 et une lumière 332 permettant le passage de l'arbre d'entrée de la boîte de vitesse portant la poulie réceptrice 16.

Outre sa fonction de protection de la courroie 18, le cache intérieur 20 sert de gabarit ou d'étalon d'assemblage qui permet le placement précis du moteur 17 et de la boite de vitesses 33, et donc de la courroie 18.

Ceci facilite le montage des éléments qui constituent la motobineuse 1 et augmente la fiabilité de cette dernière.

La figure 3B (vue sans moteur) est une vue de détail de la figure 3A (vue sans moteur) montrant l'intérieur du cache intérieur 20. Le câble d'embrayage 30 circule à l'intérieur d'une poutre 21 longitudinale et évasée (en tulipe) portée par le cache intérieur 20. Cette poutre reprend les efforts du câble d'embrayage 30 et optimise ainsi la résistance mécanique du cache intérieur 20.

On note que le cache intérieur 20 présentent plusieurs ouies 22 qui servent d'aération, ce qui assure une meilleure tenue mécanique des pièces portées par le cache intérieur 20. Ces ouies 22 de refroidissement permettent en outre une réduction du poids (écoconception) du cache intérieur 20, et de la motobineuse 1.

On note, par ailleurs, la mise en oeuvre d'un câble d'embrayage 30 ne nécessitant pas de réglage et d'un ressort de compensation 31.

De nombreuses études cinématique et essais itératifs ont conduit à définir un nouveau type de câble d'embrayage simplifié et optimisé permettant, combiné à la nouvelle forme et nouvelle implantation du levier actionneur 40, de multiplier au moins par trois la durée de vie de la courroie 18 trapézoïdale assurant l'embrayage de la motobineuse 1.

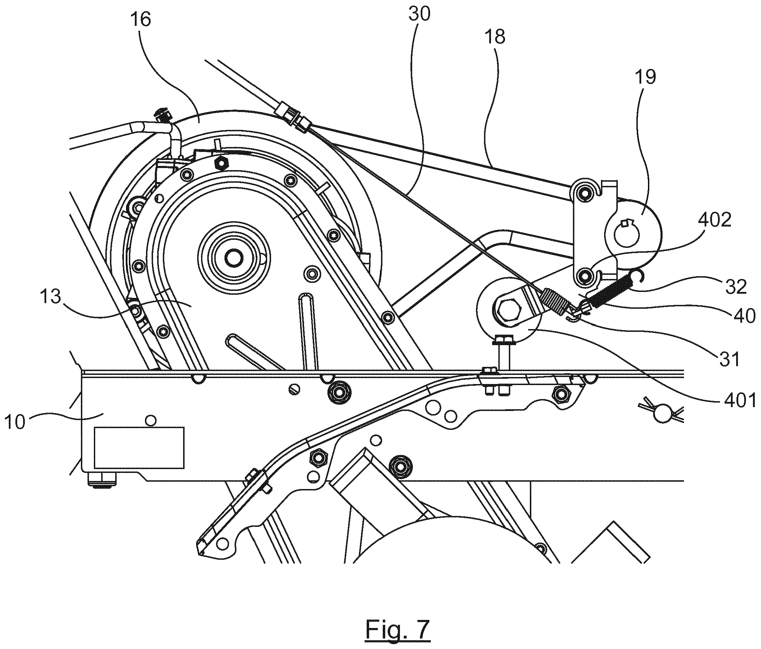

La vue de détail (sans moteur) de la figure 7 montre le câble d'embrayage 30 qui est muni à son extrémité d'un ressort de compensation 31 solidaire du levier actionneur 40, le ressort de compensation 31 permettant de compenser l'usure de la courroie 18 et son éventuel allongement, ainsi que le tassement de la gaine du câble d'embrayage 30.

Le ressort de rappel (ou ressort de traction) 32, qui est solidaire à une extrémité du cache intérieur 20 et à l'autre extrémité du levier actionneur 40, assure le retour du levier de commande d'embrayage 121 en position débrayée quand le levier de commande d'embrayage 121 est relâché par l'utilisateur (le ressort 32 constitue ainsi une sécurité de retour d'embrayage).

L'accroche des ressorts 31 et 32 est mise en oeuvre du côté intérieur du cache intérieur (figure 3B). On note que ces ressorts 31 et 32 forment un angle entre eux de plus de 90°.

Dans les motobineuses de l'art antérieur, il est nécessaire, en moyenne toutes les dix heures d'utilisation, que l'utilisateur agisse régulièrement sur un barillet de réglage intégré à la gaine afin de retrouver la tension nécessaire et suffisante au passage du couple moteur sans patinage de la courroie. La motobineuse 1 ne nécessite pas la mise en oeuvre d'un barillet de réglage du câble d'embrayage 30.

La motobineuse 1 met ainsi en oeuvre un assemblage simplifié et fiabilisé des éléments suivants qui assure le passage de couple optimum sur toute la durée de vie de la courroie 18 :
- un levier actionneur 40 optimisé qui est implanté sur le moteur 17,
- un cache intérieur 20 multifonctions (qui assure notamment l'entraxe moteur/poulie réceptrice),
- un câble d'embrayage 30 sans réglage,
- un ressort de compensation 31 (précontrainte 40N / raideur 9N/mm),
- un levier de commande d'embrayage 121 optimisé dont la course est égale à 35mm,
- une courroie standard de 44 pouces (présentant une tolérance de +/- 5 mm, compensée par levier de commande d'embrayage 121 et le câble d'embrayage 30).

Ces éléments assurent une tension constante de la courroie d'embrayage (et optimise ainsi le passage de couple), ce qui allonge la durée de vie de la courroie.

Alors que la durée de vie de la courroie d'embrayage sur les motobineuses de l'art antérieur est d'environ 40 à 60 heures (soit environ 1200 à 1800 actions d'embrayage), la durée de vie de la courroie d'embrayage sur la motobineuse de l'invention est de 140 à 200 heures (soit environ 4200 à 6000 actions d'embrayage).

Ces aspects permettent en outre d'optimiser la compacité de la motobineuse 1, et permettent un nouveau "design" des équipements de motoculture.

Ils permettent en outre de fiabiliser le fonctionnement de l'équipement, de réduire son poids et assurent une plus grande simplicité de montage et de démontage.

La figure 4 illustre la course de déplacement angulaire du levier de commande d'embrayage 121 et montre ce dernier dans différentes positions angulaires.

L'assemblage simplifié et fiabilisé des éléments susmentionnés conduit à une portion angulaire d'actionnement qui applique très tôt l'effort nécessaire à assurer la tension d'embrayage adéquat de la courroie 18.

Ainsi, la zone Z3 est une zone de pré-tension de la courroie 18 et la zone Z2 est une zone de tension optimale de la courroie 18.

Par ailleurs, la zone Z1 est une zone de relâchement possible du levier de commande d'embrayage 121 sans incidence sur la tension de la courroie 18. Ainsi, même si l'utilisateur relâche dans le temps et sans s'en rendre compte (par fatigue) le levier de commande d'embrayage 121, aucune perte de tension de la courroie 18 n'intervient.

Par conséquent, aucun patinage intempestif n'est possible.

Comme illustré sur la figure 5, une graduation, ou repère de mesure, 41 angulaire du réglage adéquat de l'embrayage est intégré au cache 20. Ce repère visuel permet à un technicien d'un service après vente de s'assurer que l'embrayage est correctement configuré avant la remise en service de la motobineuse 1. Comme illustré sur cette figure 5, le repère de mesure 41 permet de contrôler que la partie inférieure du galet 401 de placage de la courroie 18 est positionné à 30°.

La figure 9 est une vue en perspective du cache intérieur 20 monté sur la motobineuse de l'invention, sans la courroie 18 et la poulie réceptrice 16.

## Revendications

1. Equipement de motoculture (1), comprenant un châssis (10) portant au moins un outil (15) de travail du sol, une boîte de vitesses (33) et un moteur (17) entraînant en rotation ledit outil (15) par l'intermédiaire de ladite boîte de vitesses (33) et d'une courroie (18) de transmission montée lâche sur deux poulies (16, 19), l'une en liaison avec l'arbre menant dudit moteur (17) et l'autre en liaison avec ladite boîte de vitesses (33), l'embrayage étant réalisé par application contre ladite courroie (18) de moyens de mise en tension (40, 401) manoeuvrables par un levier de commande (121) disposé à une poignée (12) de la barre de guidage (11) dudit équipement (1),
ledit équipement de motoculture (1) comprenant un capot de protection (20) de ladite courroie (18),
**caractérisé en ce que** ledit capot de protection (20) présente des premiers moyens de solidarisation (171, 172) avec ledit moteur (17) et des deuxièmes moyens de solidarisation (331, 332) avec ladite boîte de vitesses (33), lesdits premiers et deuxièmes moyens de solidarisation définissant un entraxe (E) entre ledit moteur (17) et ladite boîte de vitesses (33).

2. Equipement de motoculture (1) selon la revendication 1, **caractérisé en ce que** lesdits premiers et deuxièmes moyens de solidarisation comprennent chacun au moins une lumière (171, 331) formée dans ledit capot de protection (20), apte à recevoir une vis de solidarisation avec ledit moteur (17) et ladite boîte de vitesses (33) respectivement.

3. Equipement de motoculture (1) selon la revendication 1 ou 2, **caractérisé en ce que** lesdits moyens de mise en tension de la courroie comprennent un levier actionneur (40) mobile en rotation autour d'un axe (402) solidaire dudit moteur (17).

4. Equipement de motoculture (1) selon la revendication 3, **caractérisé en ce que** ledit levier actionneur (40) est relié audit levier de commande (121) par l'intermédiaire d'un câble (30) et d'un ressort de traction (32), assurant un maintien de la tension du câble (30).

5. Equipement de motoculture (1) selon la revendication 4, **caractérisé en ce que** ledit ressort de traction (32) coopère avec un ressort de compensation (31).

6. Equipement de motoculture (1) selon l'une des revendications 4 à 6, **caractérisé en ce que** ledit capot de protection (20) comprend une poutre (21) de reprise d'effort de réaction dudit câble (30).

7. Equipement de motoculture (1) selon la revendication 6, **caractérisé en ce que** ladite poutre (21) est sensiblement parallèle à l'axe dudit câble (30).

8. Equipement de motoculture (1) selon l'une des revendications 6 et 7, **caractérisé en ce que** ladite poutre (21) présente une portion évasée, en partie inférieure dudit capot de protection (20).

9. Equipement de motoculture (1) selon l'une des revendications 4 à 8, **caractérisé en ce que** ledit capot de protection (20) comprend des moyens de mise en position et maintien en position d'un arrêt d'une gaine dudit câble (30).

10. Equipement de motoculture (1) selon l'une des revendications 1 à 9, **caractérisé en ce que** la paroi dudit capot de protection (20) comprend au moins une ouverture de refroidissement (22).

11. Equipement de motoculture (1) selon l'une des revendications 3 à 10, **caractérisé en ce que** ledit capot de protection (20) comprend au moins un repère visuel (41) de la position angulaire dudit levier actionneur (40).

12. Equipement de motoculture (1) selon l'une quelconque des revendications 1 à 11, **caractérisé en ce qu'**il appartient au groupe comprenant :
- les motoculteurs ;
- les débroussailleuses à roues ;
- les motobineuses ;
- les microbineuses ;
- les faucheuses broyeuses;
- les émousseurs ;
- les scarificateurs ;
- les aérateurs de pelouse.

## Patentansprüche

1. Ausstattung für motorisierte Landmaschine (1), umfassend ein Chassis (10), das wenigstens ein Werkzeug (15) zur Bodenbearbeitung, ein Getriebe (33) und einen Motor (17) zum Antrieb des Werkzeugs (15) in Drehung über das Getriebe (33) und einen locker auf zwei Scheiben (16, 19), die eine in Verbindung mit der Antriebswelle des Motors (17), die andere in Verbindung mit dem Getriebe (33), montierten Transmissionsriemen (18) trägt, wobei das Kuppeln durch Anlegen von durch einen an einem Griff (12) der Führungsstange (11) der Ausstattung (1) angeordneten Bedienhebel (121) bedienbaren Spannmittel (40, 401) an den Riemen (18) erfolgt,
wobei die Ausstattung für motorisierte Landmaschine (1) eine Schutzhaube (20) für den Riemen (18) umfasst,
**dadurch gekennzeichnet, dass** die Schutzhaube (20) erste Mittel zur Befestigung (171, 172) mit dem Motor (17) und zweite Mittel zur Befestigung (331, 332) mit dem Getriebe (33) aufweist, wobei erste und zweite Befestigungsmittel einen Achsabstand (E) zwischen dem Motor (17) und dem Getriebe (33) definieren.

2. Ausstattung für motorisierte Landmaschine (1) nach Anspruch 1, **dadurch gekennzeichnet, dass** erste und zweite Befestigungsmittel jeweils wenigstens einen in der Schutzhaube (20) ausgebildeten Schlitz (171, 331) umfassen, geeignet zur Aufnahme einer Schraube zur Befestigung jeweils mit dem Motor (17) und dem Getriebe (33).

3. Ausstattung für motorisierte Landmaschine (1) nach Anspruch 1 oder 2, **dadurch gekennzeichnet, dass** die Mittel zum Spannen des Riemens einen in Drehung um eine mit dem Motor (17) verbundene Achse (402) beweglichen Stellhebel (40) umfassen.

4. Ausstattung für motorisierte Landmaschine (1) nach Anspruch 3, **dadurch gekennzeichnet, dass** der Stellhebel (40) mit dem Bedienhebel (121) über ein Seil (30) und eine Zugfeder (32) verbunden ist, die ein Halten der Spannung des Seils (30) gewährleisten.

5. Ausstattung für motorisierte Landmaschine (1) nach Anspruch 4, **dadurch gekennzeichnet, dass** die Zugfeder (32) mit einer Ausgleichsfeder (31) zusammenwirkt.

6. Ausstattung für motorisierte Landmaschine (1) nach einem der Ansprüche 4 bis 6, **dadurch gekennzeichnet, dass** die Schutzhaube (20) einen Träger (21) zum Aufnehmen der Reaktionskräfte des Seils (30) umfasst.

7. Ausstattung für motorisierte Landmaschine (1) nach Anspruch 6, **dadurch gekennzeichnet, dass** der Träger (21) im Wesentlichen parallel zur Achse des Seils (30) ist.

8. Ausstattung für motorisierte Landmaschine (1) nach Anspruch 6 oder 7, **dadurch gekennzeichnet, dass** der Träger (21) einen erweiterten Abschnitt im unteren Teil der Schutzhaube (20) aufweist.

9. Ausstattung für motorisierte Landmaschine (1) nach einem der Ansprüche 4 bis 8, **dadurch gekennzeichnet, dass** die Schutzhaube (20) Mittel zum Positionieren eines Anschlags einer Hülle des Seils (30) und Halten von diesem auf Position umfasst.

10. Ausstattung für motorisierte Landmaschine (1) nach einem der Ansprüche 1 bis 9, **dadurch gekennzeichnet, dass** die Wand der Schutzhaube (20) wenigstens eine Kühlöffnung (22) umfasst.

11. Ausstattung für motorisierte Landmaschine (1) nach einem der Ansprüche 3 bis 10, **dadurch gekennzeichnet, dass** die Schutzhaube (20) wenigstens eine optische Markierung (41) der Winkelstellung des Stellhebels (40) umfasst.

12. Ausstattung für motorisierte Landmaschine (1) nach einem der Ansprüche 1 bis 11, **dadurch gekennzeichnet, dass** sie zur Gruppe gehört umfassend:
- Gartenfräsen;
- Freischneidegeräte auf Rädern;
- Motorhacken;
- Kleinmotorhacken;
- Mäher/Zerkleinerer;
- Vertikutierer;
- Grubber;
- Rasenbelüfter.

## Claims

1. Mechanised farming equipment (1), comprising a frame (10) supporting at least one tillage tool (15), a gearbox (33) and an engine (17) rotating said tool (15) via said gearbox (33) and via a drive belt (18) fitted loosely on two pulleys (16, 19), one linked to the drive shaft of said engine (17) and the other linked to said gearbox (33), the clutch being activated by application to said belt (18) of tensioning means (40, 401) movable by a control lever (121) arranged on one grip (12) of the handlebars (11) of said equipment (1), said mechanised farming equipment (1) comprising a housing (20) for protecting said belt (18),
**characterised in that** said protective housing (20) has first means (171, 172) of securing to said engine (17) and second means (331, 332) of securing to said gearbox (33), said first and second securing means defining a distance (E) between centres between said engine (17) and said gearbox (33).

2. Mechanised farming equipment (1) according to claim 1, **characterised in that** said first and second securing means each comprise at least one aperture (171, 331) formed in said protective housing (20), suitable for receiving a screw for securing to said engine (17) and said gearbox (33) respectively.

3. Mechanised farming equipment (1) according to claim 1 or 2, **characterised in that** said belt tensioning means comprise an actuating lever (40) rotatably movable about a pin (402) secured to said engine (17).

4. Mechanised farming equipment (1) according to claim 3, **characterised in that** said actuating lever (40) is connected to said control lever (121) via a cable (30) and via a tension spring (32), ensuring that the tension of the cable (30) is maintained.

5. Mechanised farming equipment (1) according to claim 4, **characterised in that** said tension spring (32) co-operates with a compensating spring (31).

6. Mechanised farming equipment (1) according to any one of claims 4 to 6, **characterised in that** said protective housing (20) comprises a beam (21) for resisting the reaction force of said cable (30).

7. Mechanised farming equipment (1) according to claim 6, **characterised in that** said beam (21) is substantially parallel to the axis of said cable (30).

8. Mechanised farming equipment (1) according to either of claims 6 or 7, **characterised in that** said beam (21) has a flared portion, in the lower portion of said protective housing (20).

9. Mechanised farming equipment (1) according to any one of claims 4 to 8, **characterised in that** said protective housing (20) comprises means for putting and keeping in position a sheath stop for said cable (30).

10. Mechanised farming equipment (1) according to any one of claims 1 to 9, **characterised in that** the wall of said protective housing (20) comprises at least one cooling aperture (22).

11. Mechanised farming equipment (1) according to any one of claims 3 to 10, **characterised in that** said protective housing (20) comprises at least one visual reference mark (41) of the angular position of said actuating lever (40).

12. Mechanised farming equipment (1) according to any of claims 1 to 11, **characterised in that** it belongs to the group comprising:
- cultivators;
- wheeled brush cutters;
- rotavators;
- mini rotavators;
- mowing and crushing machines;
- blunting machines;
- scarifiers;
- lawn aerators.
